# EUROPÄISCHE PATENTSCHRIFT

(11) **EP 0 626 599 B1**
(45) Veröffentlichungstag und Bekanntmachung des Hinweises auf die Patenterteilung: **22.04.1998**
(21) Anmeldenummer: 93120487.9
(22) Anmeldetag: 18.12.1993
(51) Int. Cl.: G02B 6/00, G02B 6/44

(54) **Verteilerschrank**
Junction box cabinet
Coffre de distribution

(30) Priorität: 17.05.1993 DE 9307334 U; 20.08.1993 DE 9312492 U; 03.09.1993 DE 9313279 U; 11.12.1993 EP 93120049
(43) Veröffentlichungstag der Anmeldung: 30.11.1994
(73) Patentinhaber: CLA-SON Leasing und Holding GmbH, 67269 Grünstadt (DE)
(72) Erfinder: Grässer, Edmond, 67269 Grünstadt (DE)
(74) Vertreter: Mierswa, Klaus, Dipl.-Ing.

(56) Entgegenhaltungen:
- DE-A- 2 656 943
- DE-A- 4 034 832
- DE-U- 9 003 207
- US-A- 5 148 353
- LABEN IN SPACE, LABEN Division of SI.EL. spa, 1984

## Beschreibung

### Technisches Gebiet:

Die Erfindung betrifft einen Verteilerschrank zum Anordnen von Verteilerplatten, die optische Lichtwellenleiter-Stecksysteme, wie Kupplungen und/oder Stecker und/oder Lichtwellenleiterkabel, haltern, insbesondere in 19-Zoll-Rastertechnik, gemäß dem Oberbegriff des Patentanspruchs 1.

### Stand der Technik:

Es sind Verteilerschränke für Lichtwellenleiterstecker und -kupplungen bekannt, die in rechteckförmigen Einschubboxen, vorzugsweise in 19-Zoll-Technik, übereinander angeordnet sind, wobei sich innerhalb der Verteilerschränke ein Montagechassis befindet, an denen Verteilerboxen festgeschraubt werden. Dieses Montagechassis können Gefache sein, ebenso wie es bekannt ist, an senkrechten Lochschienen Tragbleche anzuschrauben, die die Verteilerboxen haltern. Gewöhnlich weisen die Verteilerboxen ein vorderes Frontblech bzw. Verteilerblech auf, in welchem eine Anzahl von nebeneinanderliegenden Aussparungen angeordnet sind, in denen Stecker bzw. Kupplungen angeordnet sind..Die Kabel der im Frontblech angeordneten Verbindungsteile führen nach hinten weg; die Kabel der aufgesteckten Verbindungsteile werden seitlich ungefähr waagrecht auf die Seite geführt, oder die Kabel der gesteckten Teile werden direkt unterhalb der Frontbleche durch eine Kabelführung ebenfalls in das Innere des Verteilerschrankes gesteckt.

Die bisherige Montage derartiger Stecksysteme in einem Verteilerschrank, vorzugsweise unter Benützung von Verteilerboxen, hat sich als unzulänglich erwiesen, weil innerhalb des Verteilerschrankes eine Vielzahl von Kabeln untergebracht werden muß. Die Trunkkabel sind dazu relativ voluminös und steif und dürfen einen gewissen Biegeradius nicht unterschreiten. Des weiteren kann es vorkommen, daß mehrere Meter Trunkkabel oder Jumperkabel einer oder mehrerer Verbindungen innerhalb des Verteilerschrankes plaziert werden müssen, was erhebliche Probleme macht. Hinzu kommt, daß zum Auswechseln einer Verteilerbox, falls das Stecksystem geändert werden muß, umfangreiche Manipulationen notwendig sind, um eine Verteilerbox aus dem Montagesystem zu lösen.

Durch die DE-U1-9210644.7 sowie DE-U1-9210645.5 sind ein Verkabelungs- und Installationssystem bzw. eine Übertragungsstrecke für mit Lichtwellenleitern bestückte Anlagen bekanntgeworden, deren Verbindungsstellen räumlich voneinander getrennt sind und die aus einer Anzahl von einzelne Anschlußgehäuse aufnehmenden Schränken oder Gestellen bestehen, wobei in jedes Anschlußgehäuse ein zu einem Kabel zusammengefaßtes Lichtwellenleiterbündel mündet und die Lichtwellenleiter innerhalb des Anschlußgehäuses aufgeteilt und mit an einer Frontplatte des Anschlußgehäuses angeordneten Anschlußkupplungen zugfest verbunden sind. Die Halterungen wie Anschlußgehäuse sind fest an den Schränken oder Gestellen verschraubt.

Weiterhin sind allgemein Einschubhalterungen für elektronische Standardmodule (Eurocard standard modules), z.B. Verstärker, Analog-Digital-Wandler, Multichannel-Analyzer etc., bekannt, welche aus einem Rahmen bestehen, in den die plattenförmigen Standardmodule in senkrechter Stellung und senkrecht zur Frontfläche des Rahmens eingeschoben und dann mit Schrauben fixiert werden. Ein Beispiel ist im Katalog LABEN in SPACE, LABEN Division of Si. El. spa, 1984 z.B. auf Seite 41 dargestellt. Zur Halterung der Standardmodule in senkrechter Stellung weist der Rahmen an seiner inneren Ober- und Unterseite zwei übereinander angeordnete U-Schienen auf, die die Platten in senkrechte Stellung und in einen definierten Abstand zur Seitenfläche des Rahmens führen. Dies dient dazu, den elektronischen Kontakt von Pins bzw. Buchsen an der in Einschubrichtung hinteren Schmalseite des Standardmoduls mit Buchsen bzw. Pins an der Rückwand des Einschubrahmens herzustellen, so daß das Standardmodul über den Einschubrahmen mit Strom versorgt werden kann. Das Standardmodul muß zur Herstellung eines sicheren elektrischen Kontakts stets festgeschraubt sein.

### Technische Aufgabe:

Der Erfindung liegt die Aufgabe zugrunde, eine Vorrichtung der genannten Gattung zu schaffen, mit der die Verteilerplatten und somit auf denselben angeordnete Lichtwellenleiter-Stecksysteme in einfacher Weise zu montieren und zu demontieren sind, daneben soll eine bessere Zugänglichkeit zum Verteilerschrank gewährleistet sein, indem die Kabel in übersichtlicher Weise den Verteilerplatten, oder bei Vorhandensein von Verteilerboxen, diesen zugeordnet und aufgeräumt sind, ebenso wie platzsparende Verteilerboxen mit einer besseren Aufteilung der Stecksysteme geschaffen werden sollen.

### Offenbarung der Erfindung und deren Vorteile:

Die Lösung dieser Aufgabe besteht erfindungsgemäß in einem Verteilerschrank, insbesondere für Lichtwellenleiterkabel und insbesondere in 19-Zoll-Rastertechnik, umfassend ein rahmenartiges Gestell sowie wenigstens eine daran lösbar befestigte und im Bereich der Vorderfläche angeordnete Verteilerplatte, die optische Lichtwellenleiter-Stecksysteme, wie Kupplungen und/oder Stecker und/oder Lichtwellenleiterkabel, haltert, wobei wenigstens zwei waagrecht verlaufende, senkrecht übereinander und parallel zur Frontfläche des Verteilerschrankes angeordnete U-Schienen, mit den Öffnungen ihrer Längsschlitze einander zugewandt, waagrecht an ihren Enden innerhalb des Verteilerschrankes gehaltert sind, zwischen denen die Verteilerplatte mit ihren Längsrändern aufgenommen ist, wobei die Schenkel der oberen U-Schiene länger als die Schenkel der unteren U-Schiene sind und die Breite der Verteilerplatte größer als der lichte Abstand der beiden äußersten einander zugewandten Ränder der Schenkel der oberen und unteren U-Schienen, jedoch geringer als der lichte Abstand der Schienenböden voneinander ist, wobei die Verteilerplatte zur Halterung in senkrechter Lage in die obere U-Schiene einsetzbar und in die untere U-Schiene absenkbar ist. Vorteilhaft können die U-Schienen Teil einer Rahmenplatte sein, die eine rechteckeckförmige Aussparung zur Aufnahme der Verteilerplatte aufweist. Weiterhin vorteilhaft ist das Einklemmen einer oder mehrerer Verschlußleisten zwischen Verteilerplatte und Gestell zum Fixieren der Verteilerplatte. Weitere vorteilhafte Ausgestaltungen der Erfindung sind in den übrigen Unteransprüchen dargestellt.

Durch die Erfindung ist es in vorteilhafter Weise möglich, erfindungsgemäß Verteilerplatten mit oder ohne Verteilerboxen oder allgemein Einschubhalterungen mit einer Front- oder Verteilerplatte in die Schienen von hinten oder von vorn einzuhängen, ohne daß irgendwelche Schrauben gelöst werden müssen. Die Verteilerplatte wird mit ihrem oberen Längsrand in den Längsschlitz der oberen U-Schiene eingeschoben, dann wird der untere Rand der Verteilerplatte über den Längsschlitz der unteren U-Schiene geschwenkt und die Verteilerplatte bzw. die Verteilerbox in den Längsschlitz abgesenkt, bis auch der untere Rand der Verteilerplatte bzw. der Verteilerbox innerhalb des Längsschlitzes der unteren U-Schiene zu liegen kommt. Weil die Schenkel der oberen U-Schiene länger sind als die Schenkel der unteren U-Schiene, kann der obere Rand der Verteilerplatte bzw. der Verteilerbox nicht mehr aus dem Längsschlitz der oberen U-Schiene herausgleiten, sondern die Verteilerplatte bzw. Verteilerbox wird zwischen den U-Schienen sicher gehaltert.

Ein derartiger Verteilerschrank hat gegenüber den herkömmlichen Verteilerschränken den Vorteil, daß die Verteilerplatten zu Reparaturzwecken auch von der Rückseite des Verteilerschranks zugänglich sind und von dort herausgenommen werden können. Dies ermöglicht bessere Variationsmöglichkeiten bei der Aufstellung derartiger Verteilerschränke, die sich oft in beengten Räumlichkeiten befinden, da nicht mehr auf unbeschränkte Zugangsmöglichkeit von vorne Rücksicht genommen werden muß.

Auf die Verteilerplatte kann unten und oben je eine Flachschiene aufmontiert sein, die die Längsränder der Verteilerplatte überragen, wobei die Breite a der Verteilerplatte mitsamt den Flachschienen größer als der lichte Abstand b der beiden äußersten einander zugewandten Ränder der Schenkel der oberen und unteren U-Schienen, jedoch geringer als der lichte Abstand c der Schienenböden voneinander ist. Vorteilhaft sind die U-Schienen Teil einer Rahmenplatte, vorzugsweise integraler Teil der Rahmenplatte, die eine rechteckförmige Aussparung zur Aufnahme der Verteilerplatten oder der Verteilerboxen aufweist.

In vorteilhafter Weise ist zur festen Halterung der Verteilerplatten bzw. Verteilerboxen oder Einschubhalterungen wenigstens auf die obere Flachschiene zwischen dem oberen Rand der Verteilerplatte und dem unteren Rand des äußeren türseitigen Schenkels der oberen Schiene eine Sperrleiste lösbar aufgesetzt, beispielsweise mittels Clipmechanismus aufgeclipst. Sobald die Sperrleiste von außen türseitig montiert ist, ist ein Herausnehmen der Verteilerplatte bzw. der Verteilerbox nicht mehr möglich. Dazu muß erst die Sperrleiste entfernt werden, um die Verteilerplatte bzw. die Verteilerbox aus ihren Halterungen herauszunehmen.

Der Verteilerschrank besitzt daneben den Vorteil, daß die innerhalb des Verteilerschrankes vorhandenen Trunk- und Jumperkabel übersichtlich aufgewickelt und aufgeräumt sind, so daß in übersichtlicher Weise jederzeit innerhalb des Verteilerschrankes die Stecksysteme oder dergleichen Verbindungselemente für Lichtwellenleiter leicht und schnell gewechselt oder verändert werden können. Des weiteren ermöglicht die Erfindung eine platzsparendere, engere Anordnung von Kupplungen und/oder Steckern oder Verbindungselementen in einer Reihe; es können zum Beispiel acht Kupplungen und/oder Stecker oder Verbindungselemente pro Verteilerplatte vorgesehen werden.

An den Verteilerplatten können Verteilerboxen angeordnet sein, die ins Innere des Verteilerschrankes ragen; in diesem Fall stellen die Verteilerplatten die Frontplatten der Verteilerboxen dar, die vorteilhaft zum Schutz der an den Verteilerplatten angeordneten Kupplungen und/oder Stecker oder Verbindungselemente dienen, insbesondere beim Transport, sowie zur Halterung, Abstützung und Zugentlastung der Lichtwellenleiterkabel. Auf die erfindungsgemäße Weise können allgemein Einschubhalterungen, vorzugsweise Verteilerboxen, gehaltert werden.

### Kurzbeschreibung der Zeichnung, in der zeigen:

- Figur 1: eine perspektivische schematische Ansicht eines Verteilerschrankes mit zwei einander zugeordneten U-Schienen gemäß der Erfindung ohne Verteilerplatten oder Verteilerboxen
- Figur 2: zwei U-Schienen im Schnitt, die zwischen sich ein Verteilerplatte haltern, mit Sperrleiste, wobei Kupplungen oder Stecker weggelassen sind
- Figur 3: einen Verteilerschrank von vorne mit eingesetzten Verteilerplatten
- Figur 4: eine Draufsicht auf eine Ebene innerhalb des Verteilerschrankes unter Weglassung des Deckels zur Darstellung der Befestigung einer U-Schiene zum Haltern zweier Verteilerplatten mit Verteilerboxen
- Figur 5: einen senkrechten Schnitt durch einen Rahmen mit Aussparung, in die eine mit einer Sperrleiste gegen Herausnehmen versperrte Verteilerplatte eingesetzt ist, die eine Verteilerbox trägt, die mitsamt der Verteilerplatte und den an ihr befestigten Teilen der Übersicht halber nicht schraffiert gezeichnet sind
- Figur 6: eine Ansicht des Rahmens der Figur 5 ohne Verteilerplatte und
- Figur 7: eine perspektivische Explosions-Darstellung des Rahmens der Figur 6 mit einer eingesetzten Verteilerplatte mit Verteilerbox und einer einzusetzenden Verteilerplatte mit Verteilerbox, wobei der Rahmen an die Lochschienen der Figur 1 geschraubt werden kann.

### Wege zur Ausführung der Erfindung:

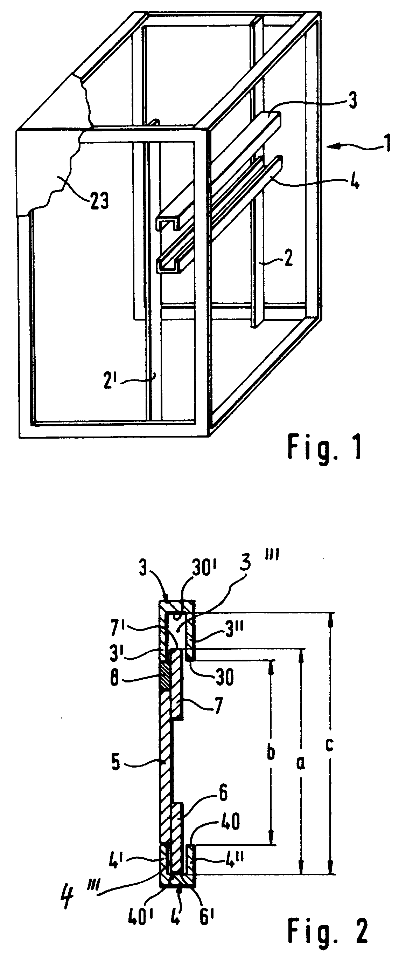

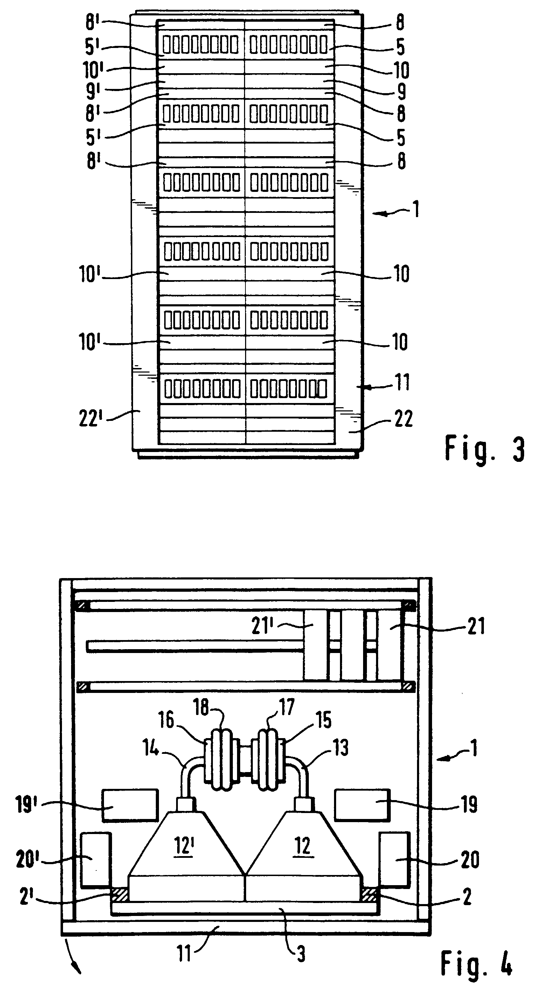

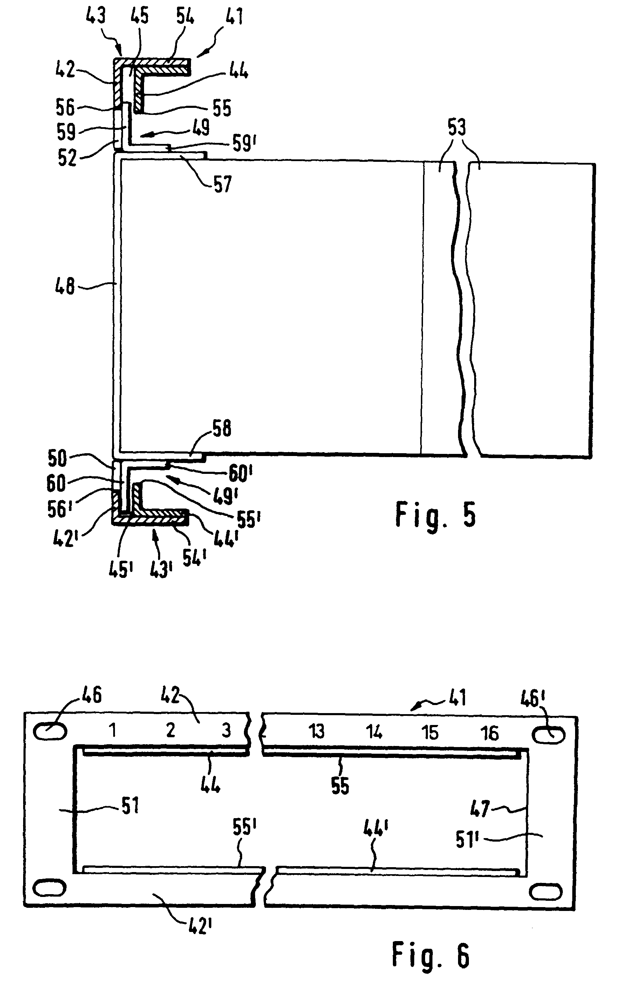

Gemäß den Figuren 1 und 2 besteht ein Verteilerschrank 1 aus Rahmenteilen sowie Seitenteilen 23 und einer vorderen Tür 11 (Figur 3). Im Türbereich sind innerhalb der Rahmenteile zwei senkrecht verlaufende Loch- oder Montageschienen 2, 2' angeordnet, an denen U-Schienen 3, 4 mit ihren Enden waagrecht befestigt sind. Für die Halterung je einer Verteilerplatte 5 mit oder ohne Verteilerbox 12, 12' (Figur 4) sind jeweils ein Paar U-Schienen 3, 4 notwendig; in Figur 1 ist ein Paar U-Schienen 3, 4 gezeichnet.

Figur 2 zeigt eine Seitenansicht eines Paares U-Schienen 3, 4 mit einer Verteilerplatte 5 im Schnitt. Die U-Schienen 3, 4 besitzen parallel zueinander verlaufende Schenkel 3', 3" bzw. 4', 4", wobei die U-Schienen 3, 4 parallel übereinander dergestalt montiert sind, daß ihre Längsschlitze 3"', 4"' einander zugewandt sind. Die Schenkel 3', 3" der oberen U-Schiene 3 sind breiter bzw. länger als die Schenkel 4', 4" der unteren U-Schiene 4, was aus Figur 2 zu entnehmen ist. Zwischen den U-Schienen ist eine Verteilerplatte 5 angeordnet, auf die längs unten und oben je eine Flachschiene 6, 7 aufmontiert ist, vorzugsweise auf dieselbe Hauptoberfläche der Verteilerplatte, wobei die Flachschienen 6, 7 die Längsränder der Verteilerplatte 5 in der Breite überragen. Die Breite a der Verteilerplatte 5 mitsamt den Flachschienen 6, 7 ist größer als der lichte Abstand b der beiden äußersten einander zugewandten Ränder 30, 40 der Schenkel 3, 3' bzw. 4, 4' der oberen und unteren U-Schienen 3, 4, jedoch geringer als der lichte Abstand c der Schienenböden 30', 40' voneinander. Zusammen mit der Tatsache, daß die Schenkel 3', 3" der oberen U-Schiene 3 länger bzw. breiter (in senkrechter Richtung) als die Schenkel 4', 4" der unteren U-Schiene 4 sind, ist dadurch ein einfaches Einsetzen der Verteilerplatte 5 mitsamt einer eventuell daran hängenden Verteilerbox in die Längsschlitze 3"', 4"' möglich. Zum Einsetzen wird der oberste Rand 7' der Flachschiene 7 in den Längsschlitz 3"' der oberen U-Schiene 3 eingeführt, danach wird der untere Rand 6' der Flachschiene 6 mitsamt der Verteilerplatte 5 über den Rand 40 des unteren Schenkels 4" hinweggeschwenkt, bis der Rand 6' der Flachschiene 6 über dem Längsschlitz 4"' der unteren U-Schiene 4 zu liegen kommt, sodann wird die Verteilerplatte 5 nach unten abgesenkt, bis der untere Rand 6' der Flachschiene 6 auf dem Schienenboden 40' aufsteht, wie es in Figur 2 gezeigt ist.

Zur festen Montage der Verteilerplatte 5 bzw. der Verteilerbox wird von vorne in den Raum zwischen dem oberen Rand der Verteilerschiene 5 und dem unteren Rand 30 des äußeren Schenkels 3' der oberen U-Schiene 3 eine Sperrleiste 8 eingesetzt bzw. auf die Flachschiene 7 aufmontiert, vorzugsweise aufgeclipst; die Sperrleiste besteht bevorzugt aus Kunststoff. Danach ist es nicht mehr möglich, die Verteilerplatte 5 bzw. die Verteilerbox 12, 12' innerhalb der Schienenböden 30', 40' der oberen und unteren U-Schiene 3, 4 zu entfernen. Zum Entfernen der Verteilerplatte 5, bzw. der Verteilerbox 12, 12' muß zuerst wiederum die Sperrleiste 8 abgenommen werden.

Vorzugsweise sind die Verteilerplatten oder -felder 5 bezüglich der gesamten Breite des Verteilerschrankes 1 gemäß Figur 3 geteilt ausgeführt, so daß in einer Ebene zwei Verteilerplatten oder Verteilerboxen sich befinden, wie es in Figur 4 gezeigt ist. Mit Bezugsziffern 9, 9' in Figur 3 sind Blindpaneelen, mit den Bezugsziffern 10,10' Kabelführungen gekennzeichnet. Eine Tür 11, die seitliche längsverlaufende Verblendungen 22, 22' aufweist, schließt den Verteilerschrank von vorne ab. Vorzugsweise sind die Verteilerplatten bzw. Verteilerboxen 12, 12' sowie der Verteilerschrank 1 und sämtliches Zubehör in 19-Zoll-Rastertechnik ausgeführt.

Figur 4 zeigt eine Draufsicht auf eine Ebene innerhalb des Verteilerschrankes 1 mit vorderer Tür 11, wobei innerhalb des Verteilerschrankes 1 im Türbereich seitlich die beiden Lochschienen 2, 2' angeordnet sind, an denen waagrecht die U-Schienen 3, 4 montiert sind, von denen in der Draufsicht auf Figur 4 die obere Schiene 3 zu sehen ist. An je einer Verteilerplatte 5 (Figur 2) ist eine Verteilerbox 12, 12' befestigt, so daß von einem Paar U-Schienen 3, 4 vorzugsweise zwei Verteilerboxen 12, 12' gehaltert werden.

Die Verteilerboxen, die wenigstens von vorn zugänglich sein können, sind quaderförmig gestaltet, wobei der hintere Teil der Verteilerboxen, vorzugsweise zwischen ein Viertel bis ein Drittel der Tiefe, in der Ebene der Verteilerbox bzw. in Draufsicht von oben, nach hinten sich verjüngend, vorzugsweise trapezförmig, gestaltet ist, wie es in Figur 4 gezeigt ist. Auf diese Weise wird innerhalb des durch die trapezförmige, sich nach hinten verjüngende Gestaltung der Verteilerboxen 12, 12' Raum innerhalb des Verteilerschrankes 1 geschaffen, in welchem Kabelrollen 19, 19' angeordnet sein können, insbesondere zur Aufnahme und zum Aufwickeln von Trunk- und/ oder Jumperkabel. Die Trunkkabel 13, 14 der Verteilerboxen 12, 12' führen ebenfalls zu Kabelrollen 15, 16, auf die die Kabelstränge 17, 18 der zugehörigen Trunkkabel aufgewickelt sind, wie es in Figur 4 schematisch gezeigt ist. Im Bereich der Lochschienen 2, 2' können nach Bedarf weitere Kabelrollen 20, 20' angeordnet sein, um weitere Kabelstränge, insbesondere von Jumperkabeln, aufzuwickeln. Sämtliche Kabelrollen sind im Verteilerschrank geeignet gehaltert und können drehbar zum Auf- und Abwickeln der Kabel sein. Darüber hinaus können im hinteren Bereich des Verteilerschrankes, vorzugsweise in mehreren Ebenen übereinander, weitere Kabelrollen 21, 21' zum Aufwickeln und Versorgen weiterer Kabelstränge angeordnet sein.

### Bevorzugte Ausführung der Erfindung:

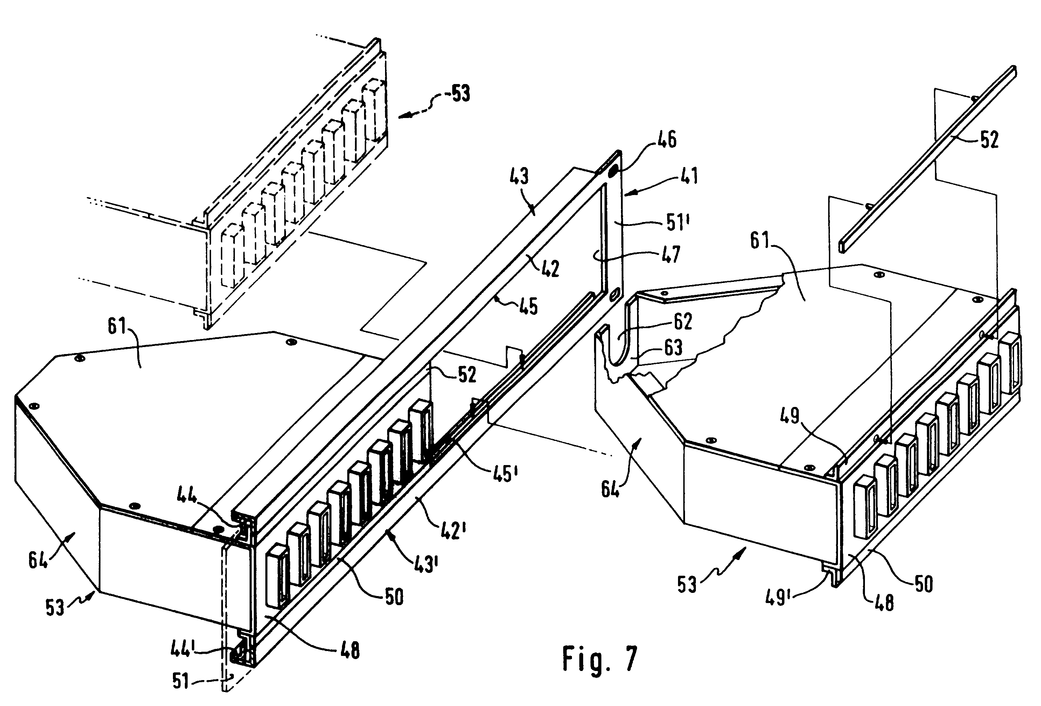

Die Figuren 5, 6 und 7 zeigen ein bevorzugtes Ausführungsbeispiel, wobei hier die U-Schienen bzw. die U-Längsöffnungen Teil einer Rahmenplatte 41 sind; vorzugsweise sind die U-Schienen integraler Teil der Rahmenplatte 41. Die Rahmenplatte 41 besteht im wesentlichen aus zwei waagrecht verlaufenden Verbindungsstegen 42, 42', die über zwei senkrecht verlaufende Verbindungsstege 51, 51' zu einem Rahmen verbunden sind, der eine rechtwinklige Aussparung 47 umfaßt. Zur Bildung von U-Schienen 43, 43' sind an dem oberen und unteren waagrecht verlaufenden Verbindungssteg 42, 42' je ein nach hinten rechtwinklig abgebogener Steg 54, 54' angeformt, an denen von innen je eine Schiene 44, 44' unter Abstand zum Verbindungssteg 42, 42' angeordnet ist. Diese Schiene 44, 44' ist vorzugsweise eine Winkelschiene, wobei der waagrecht verlaufende Schenkel mit dem jeweiligen Steg 54, 54' verbunden ist, so daß der senkrecht verlaufende Schenkel unter Bildung jeweils einer U-Längsöffnung 45, 45' parallel den Verbindungsstegen 42, 42' verläuft. Die einander zugekehrten Längsränder 55, 55' der senkrecht verlaufenden Schenkel der Winkelschienen 44, 44' überragen vorzugsweise die einander zugekehrten Längsränder 56, 56' des oberen und unteren Verbindungsteges 42, 42'.

In den vier Ecken besitzt die Rahmenplatte 41 Langlöcher 46, 46', mit denen die Rahmenplatte 41 beispielsweise an den senkrechten Lochschienen 2, 2' des Verteilerschrankes 1 gemäß der Figur 1 befestigt werden kann.

Die Verteilerplatte 48 besitzt längs oben und unten je einen rechtwinklig abgebogenen, waagrecht verlaufenden Schenkel 57, 58, auf denen je eine Schiene 49, 49' montiert ist, die vorzugsweise eine Winkelschiene mit zwei rechtwinklig zueinander verlaufenden Längsschenkeln 59, 59', 60, 60' ist. Die senkrecht verlaufenden Längsschenkel 59, 60 der Schienen 49, 49' ragen dabei in die U-Längsöffnungen 45, 45', so daß die inneren Längsränder 56, 56', 55, 55' der Verbindungstege 42, 42' der Rahmenplatte 41 die Verteilerplatte 48 bzw. die senkrecht stehenden Längsschenkel 59, 59' der Winkelschienen 49, 49' in montiertem Zustand der Verteilerplatte 48 überragen. Innerhalb einer jeden Verteilerplatte 48 sind acht längliche Aussparungen angeordnet, in denen je eine Halterung für ein Lichtwellenleiter-Stecksystem angeordnet ist.

Zwischen den Schenkeln 57, 58 der Verteilerplatte 48 ist eine Verteilerbox 53 montiert. Um nach dem Einsetzen der Verteilerplatte 48 in die Rahmenplatte 41, was von vorn und hinten geschehen kann, ein Herausnehmen der Verteilerplatte 48 mitsamt der daran befestigten Verteilerbox 53 zu verhindern, ist anschließend nach dem Einführen der Verteilerplatte 48 in die Aussparung 47 der Rahmenplatte 41 auf die Außenseite des oberen Längsschenkels 59 der Winkelschiene 49 eine Sperrleiste 52 montiert. Die Sperrleiste 52, die unterschiedlich farbig gestaltet sein kann, besitzt somit die Breite des Abstandes des Längsrandes 56 von der Oberkante der Verteilerplatte 48 bzw. des Schenkels 57 der Verteilerplatte 48.

Die Verbindungsstege 42, 42' der Rahmenplatte 41 bzw. dieselbe, die Sperrleiste 52 sowie die Verteilerplatte 48 liegen dabei in einer senkrechten Flucht, weshalb die Winkelschienen 49, 49' um die Materialdicke der Verbindungsstege 42, 42' nach hinten zurückversetzt sind. Zwischen dem Längsrand 56' des unteren Verbindungssteges 42' und der Unterkante der Verteilerplatte 48 bzw. des Schenkels 58 der Verteilerplatte 48 kann ebenfalls eine Flachschiene 50 in senkrechter Flucht mit der Verteilerplatte 48 montiert sein.

Die Verteilerbox 53 besitzt einen hinteren, sich trapezartig verjüngenden Teil 64, der mit einer hinteren, schmalen Stirnfläche 63 abschließt, in der sich ein nach oben offener Längsschlitz 62 befindet, in den eine Kabelhalterung des in die Verteilerbox 53 eingeführten Trunk- oder Zuführungskabels 13, 14 zur Zugentlastung eingesteckt werden kann. Die Verteilerbox 53 kann mit einem Deckel 61 verschlossen sein. Innerhalb der Verteilerbox 53 sind die einzelnen Leitungen der Trunk- oder Zuführungskabel 13, 14 lose zu den Stecksystemen geführt. Die Verteilerplatten, die U-Schienen, die Rahmenplatte sowie die Verteilerboxen können aus Metallblechen oder aus Kunststoff hergestellt sein.

### Gewerbliche Anwendbarkeit und Nützlichkeit:

Der erfindungsgemäße Verteilerschrank ist insbesondere zum Anordnen von Verteilerplatten, die optische Lichtwellenleiter-Stecksysteme haltern, wie Kupplungen und/der Stecker und/oder Adapter und/oder Lichtwellenleiterkabel mit oder ohne Verteilerboxen, allgemein von Einschubhalterungen, vorzugsweise innerhalb eines Verteilerschrankes, insbesondere in 19-Zoll-Rastertechnik, anwendbar. Die Nützlichkeit der Erfindung liegt darin, daß die Verteilerplatten bzw. Verteilerboxen bzw. Einschubhalterungen in die Schienen bzw. den Rahmen von hinten oder vorn eingehängt werden können, ohne daß irgendwelche Schrauben gelöst werden müssen.

### Liste der Bezugszeichen:

- 1: Verteilerschrank
- 2, 2': Lochschienen
- 3,4: U-Schienen
- 3', 3", 4', 4": Schenkel der U-Schienen
- 3"', 4"': Längsschlitze der U-Schienen
- 5: Verteilerplatte (Verteilerfeld)
- 6, 7: Flachschienen
- 6', 7': äußerste Ränder der Flachschienen
- 8, 8': Sperrleisten
- 9, 9': Blindpaneelen
- 10,10': Kabelführung
- 11: Tür
- 12,12',53: Verteilerboxen
- 13,14: Trunkkabel
- 15,16: Kabelrollen
- 17,18: aufgewickelte Kabelstränge
- 19,19', 20,20', 21, 21': Kabelrollen
- 22, 22': Blenden
- 23: Seitenwand
- 30, 40: äußerste Ränder der U-Schienen
- 30', 40': Schienenböden
- 41: Rahmenplatte
- 42,42': Verbindungsstege
- 43,43': U-Schienen
- 44,44',49,49': Winkelschienen
- 45,45': U-Längsöffnungen
- 46,46': Langlöcher
- 47: Aussparung
- 48: Verteilerblech
- 50: Flachschiene
- 51,51': Verbindungsstege
- 52: Sperrschiene
- 54,54': Stege
- 55,55': Längsränder der Winkelschienen
- 56,56': Längsränder der U-Schienen
- 57,58: Schenkel
- 59,59',60,60': Längsschenkel
- 61: Deckel
- 62: Längsschlitz
- 63: Stirnwand
- 64: trapezförmiger Teil der Verteilerbox
- a: Breite des Verteilerbleches bzw. Abstand der äußersten Ränder der Flachschienen
- b: lichter Abstand der einander zugewandten Ränder der Schenkel der U-Schienen
- c: lichter Abstand der Schienenböden

## Patentansprüche

1. Verteilerschrank, insbesondere für Lichtwellenleiterkabel und insbesondere in 19-Zoll-Rastertechnik, umfassend ein rahmenartiges Gestell (1) sowie wenigstens eine daran lösbar befestigte und im Bereich der Vorderfläche angeordnete Verteilerplatte (5, 48), die optische Lichtwellenleiter-Stecksysteme, wie Kupplungen und/oder Stecker und/oder Lichtwellenleiterkabel (13,14,17,18), haltert, dadurch gekennzeichnet,
daß wenigstens zwei waagrecht verlaufende, senkrecht übereinander und parallel zur Frontfläche des Verteilerschrankes angeordnete U-Schienen (3,4), mit den Öffnungen ihrer Längsschlitze (3"', 4"') einander zugewandt, waagrecht an ihren Enden innerhalb des Verteilerschrankes (1) gehaltert sind, zwischen denen die Verteilerplatte (5) mit ihren Längsrändern aufgenommen ist, wobei die Schenkel (3',3") der oberen U-Schiene (3) länger als die Schenkel (4',4") der unteren U-Schiene (4) sind und die Breite (a) der Verteilerplatte (5,48) größer als der lichte Abstand (b) der beiden äußersten einander zugewandten Ränder (30,40) der Schenkel (3,3',4,4') der oberen und unteren U-Schienen (3,4), jedoch geringer als der lichte Abstand (c) der Schienenböden (30',40') voneinander ist, so daß die Verteilerplatte zur Halterung in senkrechter Lage in die obere U-Schiene einsetzbar und in die untere U-Schiene absenkbar ist.

2. Verteilerschrank nach Anspruch 1, dadurch gekennzeichnet,
daß die U-Schienen (43,43') Teil einer Rahmenplatte (41), vorzugsweise integraler Teil, sind, die eine rechteckförmige Aussparung (47) zur Aufnahme der Verteilerplatte (48) aufweist.

3. Verteilerschrank nach Anspruch 2, dadurch gekennzeichnet,
daß zur Bildung der U-Schienen (43,43') die Rahmenplatte (41) einen oberen und unteren Verbindungssteg (42,42') besitzt, die je einen nach hinten rechtwinklig abgebogenen Steg (54,54') aufweisen, an denen von innen je eine Winkelschiene (44,44') unter Abstand zum Verbindungsteg (42,42') und Ausbildung von U-Längsöffnungen (45,45') angeordnet ist.

4. Verteilerschrank nach Anspruch 3, dadurch gekennzeichnet,
daß die einander zugekehrten Längsränder (55,55') der Winkelschienen (44,44') die einander zugekehrten Längsränder (56,56') des oberen und unteren Verbindungssteges (42,42') überragen.

5. Verteilerschrank nach Anspruch 2, dadurch gekennzeichnet,
daß die Verteilerplatte (48) oben und unten je einen rechtwinklig abgebogenen, längs verlaufenden Schenkel (57,58) aufweist, auf denen je eine Schiene (49,49') mit zwei rechtwinklig zueinander verlaufenden Längsschenkeln (59,59',60,60') aufmontiert sind, deren senkrecht verlaufende Längsschenkel (59,60) in die U-Längsöffnungen (45,45') ragen und die inneren Längsränder (56,56', 55,55') der Rahmenplatte (41) überragen, wobei zwischen den Schenkeln (57,58) eine Verteilerbox (53) montiert ist.

6. Verteilerschrank nach Anspruch 1, dadurch gekennzeichnet,
daß längs auf der Verteilerplatte (5) unten und oben je eine Flachschiene (6,7) aufmontiert ist, die die Längsränder der Verteilerplatte (5) überragt, wobei die Breite (a) der Verteilerplatte (5) mitsamt den Flachschienen (6,7) größer als der lichte Abstand (b) der beiden äußersten einander zugewandten Ränder (30,40) der Schenkel (3,3',4,4') der oberen und unteren U-Schienen (3,4), jedoch geringer als der lichte Abstand (c) der Schienenböden (30',40') voneinander ist.

7. Verteilerschrank nach Anspruch 6, dadurch gekennzeichnet,
daß wenigstens auf die obere Flachschiene (7) zwischen dem oberen Rand der Verteilerplatte (5) und dem unteren Rand (30) des äußeren, türseitigen Schenkels (3') der oberen U-Schiene (3) eine abnehmbare Sperrleiste (8,52) aufgesetzt ist zum festen Haltern und Lösen der Verteilerplatte (5,48) bzw. der Verteilerboxen (12,12') innerhalb des Verteilerschrankes (1).

8. Verteilerschrank nach Anspruch 1 oder 2, dadurch gekennzeichnet,
daß innerhalb des Verteilerschrankes (1) im seitlichen Türbereich senkrechte Lochschienen (2,2') angeordnet sind, an denen die U-Schienen (3,4) mit ihren Enden gehaltert sind.

9. Verteilerschrank nach einem der vorangegangenen Ansprüche, dadurch gekennzeichnet,
daß die Verteilerplatte (5,48) die Frontseite einer Verteilerbox (12,12',53) ist, welche quaderförmig ist und in der Draufsicht von oben an ihrem hinteren, der Verteilerplatte (5,48) abgewandten Ende einen sich nach hinten verjüngenden Teil (64) aufweist, der vorzugsweise trapezförmig gestaltet ist.

10. Verteilerschrank nach Anspruch 9, dadurch gekennzeichnet,
daß die Verteilerbox (53) in der hinteren, schmalen Stirnwand (63) gegenüber der Verteilerplatte (48) einen nach oben hin offenen Längsschlitz (62) aufweist zum Einstecken und zur Zugentlastung einer Kabelhalterung des Trunk- oder Zuführungskabels (13,14).

11. Verteilerschrank nach Anspruch 1, 2, 9 oder 10, dadurch gekennzeichnet,
daß in zwei einander zugeordneten U-Schienen (3,4) zwei Verteilerplatten (5) bzw. zwei Verteilerboxen (12,12') nebeneinander angeordnet sind, wobei vorzugsweise innerhalb einer jeden Verteilerplatte (5) acht LichtwellenleiterStecker bzw. -kupplungen angeordnet sind.

12. Verteilerschrank nach einem der vorangegangenen Ansprüche, dadurch gekennzeichnet,
daß die von den Verteilerboxen (12,12',53) abgehenden Kabel (13,14) insbesondere Trunkkabel, auf Kabelrollen (15,16) aufgewickelt sind, die in Nachbarschaft der Verteilerboxen (12,12') innerhalb des Verteilerschrankes (1) angeordnet sind.

13. Verteilerschrank nach einem der Ansprüche 9 bis 12, dadurch gekennzeichnet,
daß innerhalb des durch die trapezförmige nach hinten verjüngende Gestaltung der Verteilerboxen (12,12',53) geschaffenen Raumes innerhalb des Verteilerschrankes (1) weitere Kabelrollen (19,19',20,20',21,21'), insbesondere zur Aufnahme von Trunk- und/oder Jumperkabeln (13,4,17,18), angeordnet sind.

## Claims

1. Distribution cabinet, especially for optical fiber cables, particularly in 19-inch raster scan mode, encompassing a frame-like rack (1) as well as at least one distribution plate (5, 48) which is detachably affixed to said rack and arranged in the area of the front surface and which holds optical fiber plug-in systems such as couplings and/or plugs and/or optical fiber cables (13, 14, 17, 18), characterized in that
at least two horizontal U-shaped rails (3, 4), positioned vertically above each other and arranged parallel to the front surface of the distribution cabinet, with the opposing openings of their lengthwise slits (3"', 4"'), are held horizontally at their ends inside the distribution cabinet (1), between whose ends the distribution plate (5) is held by its lengthwise edges, whereby the legs (3', 3") of the upper U-shaped rail (3) are longer than the legs (4', 4") of the lower U-shaped rail (4) and the width (a) of the distribution plate (5, 48) is greater than the clear distance (b) between the two opposing outer edges (30, 40) of the legs (3, 3', 4, 4') of the upper and lower U-shaped rails (3, 4) but less than the clear distance (c) of the rail bottoms (30', 40') from each other so that, for purposes of being held in the vertical position, the distribution plate can be inserted into the upper U-shaped rail and can be lowered into the lower U-shaped rail.

2. Distribution cabinet according to Claim 1, characterized in that
the U-shaped rails (43, 43') are part, preferably an integral part, of a frame plate (41), that has a rectangular recess (47) which receives the distribution plate (48).

3. Distribution cabinet according to Claim 2, characterized in that
in order to form the U-shaped rails (43, 43'), the frame plate (41) has an upper and lower connection web (42, 42'), each of which has a web (54, 54') bent towards the back at a right angle, on each of which an angled rail (44, 44') is arranged on the inside at a certain distance to the connection web (42, 42'), thus forming U-shaped lengthwise openings (45, 45').

4. Distribution cabinet according to Claim 3, characterized in that
the opposing lengthwise edges (55, 55') of the angled rails (44, 44') extend beyond the opposing lengthwise edges (56, 56') of the upper and lower connection webs (42, 42').

5. Distribution cabinet according to Claim 2, characterized in that,
at the top as well as at the bottom, the distribution plate (48) has legs (57, 58), each running lengthwise and bent at a right angle, on each of which a rail (49, 49') having two lengthwise legs (59, 59', 60, 60') running at a right angle to each other is mounted, whose vertical lengthwise legs (59, 60) protrude into the U-shaped lengthwise openings (45, 45') and the inner lengthwise edges (56, 56', 55, 55') extend beyond the frame plate (41), whereby a distribution box (53) is mounted between the legs (57, 58).

6. Distribution cabinet according to Claim 1, characterized in that,
a flat rail (6, 7) is mounted lengthwise on the distribution plate (5), at the top as well as at the bottom, said flat rail extending beyond the lengthwise edges of the distribution plate (5), whereby the width (a) of the distribution plate (5), together with the flat rails (6, 7), is greater than the clear distance (b) between the two opposing outer edges (30, 40) of the legs (3, 3', 4, 4') of the upper and lower U-shaped rails (3, 4) but less than the clear distance (c) of the rail bottoms (30', 40') from each other.

7. Distribution cabinet according to Claim 6, characterized in that,
at least on the upper flat rail (7) between the upper edge of the distribution plate (5) and the lower edge (30) of the outer leg (3') of the upper U-shaped rail (3) on the door side, there is a removable ledger (8, 52) to secure and release the distribution plate (5, 48) or the distribution box (12, 12') inside the distribution cabinet (1).

8. Distribution cabinet according to Claim 1 or 2, characterized in that,
inside the distribution cabinet (1), in the side door area, there are vertical perforated rails (2, 2') on which the U-shaped rails (3, 4) are held by their ends.

9. Distribution cabinet according to one of the preceding claims, characterized in that
the distribution plate (5, 48) is the front of a distribution box (12, 12', 53) which is cuboid in shape and, in the top view from above, at its back end facing away from the distribution plate (5, 48), it has a part (64) tapering towards the back, which is preferably trapezoidal in shape.

10. Distribution cabinet according to Claim 9, characterized in that,
in the back, narrow face wall (63), across from the distribution plate (48), the distribution box (53) has a lengthwise slit (62) open towards the top for inserting and strain-relieving a cable holder of the trunk or feed cable (13, 14).

11. Distribution cabinet according to Claims 1, 2, 9 or 10, characterized in that,
in two U-shaped rails (3, 4) associated with each other, there are two distribution plates (5) or two distribution boxes (12, 12') which are arranged next to each other, whereby, preferably inside each distribution plate (5), there are eight optical fiber plugs or couplings.

12. Distribution cabinet according to one of the preceding claims, characterized in that
the cables (13, 14), especially trunk cables, coming from the distribution boxes (12, 12', 53) are wound up on cable rolls (15, 16) which are arranged near the distribution boxes (12, 12') inside the distribution cabinet (1).

13. Distribution cabinet according to one of Claims 9 through 12, characterized in that,
inside the space created by the distribution boxes (12, 12', 53) which tapers towards the back in a trapezoidal shape inside the distribution cabinet (1), there are additional cable rolls (19, 19', 20, 20', 21, 21'), especially for holding trunk and/or jumper cables (13, 4, 17, 18).

## Revendications

1. Coffre de distribution, notamment pour câbles à fibres optiques, plus particulièrement en technique rack de 19", comprenant un bâti (1) tenant d'un châssis, ainsi que au moins une plaque de distribution (5,48) qui y est fixée de façon détachable et est disposée dans la zone de la face avant, et qui supporte des systèmes d'enfichage pour câbles à fibres optiques tels que couplages et/ou fiches et/ou câbles à fibres optiques (13,14,17,18), caractérisé en ce que
au moins deux profilés en U (3,4) logés dans le sens horizontal et superposés verticalement, parallèlement à la face avant du coffre de distribution (1), profilés dont les ouvertures des fentes longitudinales (3"',4"') sont en regard et qui sont fixés en leurs extrémités à l'horizontale à l'intérieur du coffre de distribution (1), et entre lesquels la plaque de distribution (5) est réceptionnée et maintenue par ses bords longitudinaux, les côtés latéraux (3',3") du profilé en U du haut (3) ayant une longueur supérieure à celle des côtés latéraux (4',4") du profilé en U du bas (4), la largeur (a) de la plaque de distribution (5,48) étant supérieure à l'écart (b) entre les bords extérieurs qui se font face (30,40) des côtés latéraux (3,3',4,4') des profilés en U du haut et du bas (3,4), mais étant cependant inférieure à l'écart (c) entre les fonds des profilés (30',40'), de sorte que, pour pouvoir être logée dans la position verticale, la plaque de distribution peut être engagée dans le profilé en U du haut et abaissée dans le profilé en U du bas.

2. Coffre de distribution selon la revendication 1, caractérisé en ce que
les profilés en U (43,43') font partie d'une platine-cadre (41) dont ils forment de préférence partie intégrale, la platine-cadre présentant un évidement rectangulaire (47) destiné au logement de la plaque de distribution (48).

3. Coffre de distribution selon la revendication 2, caractérisé en ce que,
pour la conformation des profilés en U (43,43'), la platine-cadre (41) possède une traverse de jonction en haut et en bas (42,42'), chacune de ces traverses présentant une autre traverse (54,54') repliée vers l'arrière sous un angle de 90 degrés, sur chacune desquelles est disposé, à la face intérieure, un profilé angulaire (44,44') tenant compte d'un écart par rapport à la traverse de jonction (42,42') et de la formation d'ouvertures oblongues en U (45,45').

4. Coffre de distribution selon la revendication 3, caractérisé en ce que
les bords longitudinaux en regard (55,55') des profilés angulaires (44,44') dépassent en hauteur les bords longitudinaux en regard (56,56') des traverses de jonction du haut et du bas (42,42').

5. Coffre de distribution selon la revendication 2, caractérisé en ce que
la plaque de distribution (48) fait état en haut et en bas d'une branche longitudinale (57,58) disposées à angle droit l'une par rapport à l'autre, sur chacune desquelles est monté un profilé (49,49') ayant deux branches (59,59',60,60') concourantes à angle droit et dont les branches longitudinales verticales (59, 60) font saillie à l'intérieur des ouvertures en U (45,45') et dépassent les bords longitudinaux intérieurs (56,56',55,55') de la platine-cadre (41), une boîte de distribution (53) étant montée entre les branches (57,58).

6. Coffre de distribution selon la revendication 1, caractérisé en ce que
sur la plaque de distribution (5), dans le sens de la longueur, sont fixés en haut et en bas un profilé plat (6,7) qui dépassent les bords de la plaque de distribution (5) dans le sens de la longueur, la largeur (a) de la plaque de distribution (5) y compris des profilés plats (6,7) étant supérieure à l'écart (b) entre les deux bords en regard les plus éloignés (30,40) des côtés latéraux (3,3',4,4') des profilés en U du haut et du bas (3,4), mais étant cependant inférieure à l'écart (c) entre les fonds des profilés (30',40').

7. Coffre de distribution selon la revendication 6, caractérisé en ce que
au moins sur le profilé plat du haut (7), entre le bord supérieur de la plaque de distribution (5) et le bord inférieur (30) de la branche extérieure (3') située côté porte du profilé en U du haut (3), est mise en place une barre d'arrêt (8,52) amovible destinée à maintenir solidement ou à dégager la plaque de distribution (5,48), ou les boîtes de distribution (12,12') à l'intérieur du coffre de distribution (1).

8. Coffre de distribution selon l'une des revendications 1 ou 2, caractérisé en ce que,
à l'intérieur du coffre de distribution (1), sont disposés dans la zone de la porte, sur les côtés, des profilés (2,2') perforés, sur lesquels les profilés en U (3,4) sont maintenus par leurs extrémités.

9. Coffre de distribution selon l'une des revendications ci-avant, caractérisé en ce que
la plaque de distribution (5,48) est la face avant d'une boîte de distribution (12, 12',53), de forme rectangulaire et que, vue d'en haut, elle fait état en son extrémité arrière la plus éloignée de la plaque de distribution (5,48) d'une partie (64) qui s'amincit vers l'arrière et qui est configurée de préférence en trapèze.

10. Coffre de distribution selon la revendication 9, caractérisé en ce que
la boîte de distribution (53) présente en sa paroi étroite à l'arrière (63), en regard de la plaque de distribution (48), une fente oblongue ouverte vers le haut (62), destinée à l'enfichage et à la décharge de traction d'un porte-câble d'un câble à grande distance ou câble d'alimentation (13,14).

11. Coffre de distribution selon l'une des revendications 1,2,9 ou 10, caractérisé en ce que
dans deux profilés en U (3,4) assignés l'un à l'autre sont juxtaposées deux plaques de distribution (5), ou deux boîtes de distribution (12,12'), chacune des plaques de distribution (5) ayant de préférence en son intérieur huit connecteurs ou couplages pour câbles à fibres optiques.

12. Coffre de distribution selon l'une des revendications ci-avant, caractérisé en ce que
les câbles (13,14) sortant des boîtes de distribution (12,12',53), en particulier câbles à longue distance, sont enroulés sur des bobines de câbles (15,16) disposés dans le voisinage des boîtes de distribution (12,12') à l'intérieur du coffre de distribution (1).

13. Coffre de distribution selon l'une des revendications 9 à 12, caractérisé en ce que
à l'intérieur de l'espace généré à l'intérieur du coffre de distribution (1) par la conformation trapézoïdale des boîtes de distribution (12,12',53) s'amincissant vers l'arrière, d'autres bobines de câbles (19,19',20,20',21,21') sont disposées notamment pour réceptionner des câbles à grande distance ou des câbles de connexion (13,14,17,18).
